# EUROPÄISCHE PATENTSCHRIFT

(11) **EP 1 744 934 B1**
(45) Veröffentlichungstag und Bekanntmachung des Hinweises auf die Patenterteilung: **30.07.2008**
(21) Anmeldenummer: 05754343.1
(22) Anmeldetag: 07.05.2005
(51) Int. Cl.: B60R 16/02, G07C 5/00, G07C 5/08

(54) **VERFAHREN ZUM STEUERN EINES AUTOMATISIERTEN KRAFTFAHRZEUG-ANTRIEBSSTRANGES UND ANTRIEBSSTRANG**
PROCESS FOR CONTROLLING AN AUTOMATED MOTOR VEHICLE DRIVE TRAIN AND DRIVE TRAIN
PROCEDE DE COMMANDE D'UNE CHAINE CINEMATIQUE AUTOMATISEE D'UN VEHICULE ET CHAINE CINEMATIQUE

(30) Priorität: 14.05.2004 DE 102004024840
(43) Veröffentlichungstag der Anmeldung: 24.01.2007
(73) Patentinhaber: GETRAG Getriebe- und Zahnradfabrik Hermann Hagenmeyer GmbH & Cie KG, 74199 Untergruppenbach (DE)
(72) Erfinder: RINDERKNECHT, Stephan, 72810 Gomaringen (DE)
(74) Vertreter: Steil, Christian
(86) Internationale Anmeldenummer: PCT/EP2005/004971
(87) Internationale Veröffentlichungsnummer: WO 2005/111948

(56) Entgegenhaltungen:
- EP-A- 0 612 643
- EP-A- 1 004 485
- DE-A1- 10 211 130
- DE-A1- 10 258 873

## Beschreibung

Die Erfindung betrifft ein Verfahren zum Steuern eines Kraftfahrzeug-Antriebsstranges, der einen Motor und ein Getriebe aufweist, mit dem Schritt, wenigstens einen Verschleiß-Parameter des Getriebes während dessen Laufleistung zumindest einmal zu erfassen, wobei der Verschleiß-Parameter den Verschleiß bzw. die Ermüdung wenigstens eines Bauteiles des Getriebes darstellt, wobei ein Belastungs-Parameter, der die maximale Belastung des Getriebes durch den Motor darstellt, in Abhänigkeit von dem erfassten Verschleiß-Parameter eingestellt wird.

Die vorliegende Erfindung betrifft ferner einen Antriebsstrang für ein Kraftfahrzeug mit einem Motor und einem Getriebe, mit Mitteln zum Erfassen wenigstens eines Verschleiß-Parameters des Getriebes und mit Mitteln zum Steuern des Antriebsstranges.

Ein derartiges Verfahren bzw. ein derartiger Antriebsstrang sind bekannt aus der WO 01/61653 A1. Diese Druckschrift befasst sich mit einem Verfahren zur Ermittlung der verbleibenden Betriebsdauer eines Produktes. Hierbei werden Werte von bestimmten Betriebsgrößen erfasst. Der Wertebereich der einzelnen Betriebsgrößen wird in Klassen unterteilt und die Betriebsdauern werden in Abhängigkeit von der Klasse, in die der erfasste Wert fällt, erfasst. Dabei kann auch eine Zuweisung von Gewichtungsfaktoren erfolgen, um eine gewichtete, kumulierte Betriebsdauer für ein Produkt zu ermitteln.

Bei dem Produkt, dessen Betriebsdauer bis zum technischen Versagen erfasst wird, kann es sich bspw. um einen Motor, ein Getriebe oder ein Steuergerät eines Kraftfahrzeuges handeln.

Durch dieses Verfahren zum Bestimmen der verbleibenden Betriebsdauer soll eine besonders zuverlässige präventive Wartung/Reparatur kurz vor Erreichen des Endes der technischen Laufleistung ermöglicht werden.

Der Begriff Laufleistung wird vorliegend als Oberbegriff für verschiedene Begriffe verstanden, die mit der Beanspruchung eines Kraftfahrzeugs in Verbindung gebracht werden können, wie beispielsweise Betriebsdauer, Laufstrecke, Laufzeit etc.

Bei Kraftfahrzeugen ist ein wesentliches Qualitätskriterium, dass das Kraftfahrzeug innerhalb einer vorgegebenen mittleren Laufleistung möglichst nicht oder möglichst selten ausfällt. Entscheidendes Kriterium hierfür ist die Zuverlässigkeit, also die Wahrscheinlichkeit dafür, dass ein Produkt während einer definierten Laufleistung unter gegebenen Funktions- und Umgebungsbedingungen nicht ausfällt (vgl. "Fahrzeuggetriebe - Grundlagen, Auswahl, Auslegung und Konstruktion" von G. Lechner und H. Naunheimer, Springer-Verlag, Seite 395).

Für die Zuverlässigkeit ist eines der entscheidenden Kriterien die sogenannte Ausfallrate λ(t) als Maß für das Ausfallrisiko eines Teils, wenn es bereits bis zu dem Streckenpunkt (d) bzw. Zeitpunkt (t) überlebt hat.

Das Ausfallverhalten eines Produkts zeigt sich häufig in der Form einer sogenannten "Badewannenkurve". Diese wird gebildet durch drei Bereiche. Der erste Bereich betrifft Frühausfälle, die im Wesentlichen durch Montage- oder Fertigungsfehler entstehen. Ein mittlerer Bereich relativ geringer Ausfallrate ist der Bereich der Zufallsausfälle, verursacht bspw. durch Bedienungsfehler, Schmutz oder Ähnliches.

Der dritte Bereich, bei dem die Ausfallrate mit steigender Laufleistung stark ansteigt, ist der Bereich der Verschleiß- und Ermüdungsausfälle.

Der Bereich zwei lässt sich nur relativ wenig beeinflussen. Der Bereich eins lässt sich durch eine strenge Fertigungs- und Qualitätssicherung positiv beeinflussen. Im vorliegenden Zusammenhang ist jedoch der Bereich drei von besonderer Bedeutung.

Denn durch eine geeignete Laufleistungsberechnung kann bei der Konstruktion des Getriebes dafür gesorgt werden, dass unter Berücksichtigung aller möglicher Umstände ein möglichst schadensfreier Betrieb über die geforderte mittlere Laufleistungserwartung erzielt wird.

Der Akzent liegt hierbei auf der Schadensfreiheit bzw. der maximalen Zuverlässigkeit über eine definierte Laufleistung, zum Beispiel null Ausfälle innerhalb der ersten 150.000 km.

Da bereits bei Ausfall eines Teils des Getriebes (bspw. Bruch eines Zahnrades) das Getriebe insgesamt ausfällt, sind die einzelnen Bauteile des Getriebes jeweils in Abhängigkeit von der zu erwartenden Belastung so zu konstruieren, dass sie sämtlich die mittlere Laufleistungswartung erfüllen.

Von ganz entscheidender Bedeutung ist bei dieser Laufleistungsberechnung das unterschiedliche Nutzungsverhalten der Verbraucher. So gibt es bekanntlich Fahrzeugführer, die extrem defensiv fahren und hierbei die Leistungsfähigkeit ihres Fahrzeuges nahezu niemals voll ausschöpfen. Andererseits gibt es Fahrer, die von ihrem Fahrzeug die verfügbare Leistung ständig abfordern. Die leistungsbetonten Fahrer machen jedoch insgesamt nur einen relativ geringen Bruchteil der Nutzer insgesamt aus. Nichtsdestotrotz ist ein Getriebe in der Regel so konstruiert, dass es auch bei leistungsbetonten Fahrern eine hohe Laufleistungserwartung besitzt.

Im Folgenden wird aus einer vereinfachten Darstellung davon ausgegangen, dass ein Getriebe eine mittlere Laufleistungserwartung von 100.000 Kilometern besitzt, also im Mittel nicht vor Erreichen dieser Fahrleistung mit dem Fahrzeug ausfällt, in das das Getriebe eingebaut ist. Es versteht sich jedoch, dass in der Praxis die mittlere Laufleistungserwartung auch bspw. 150.000 oder 200.000 Kilometer betragen kann.

Aus dem oben Gesagten ergibt sich, dass bei leistungsbetonten Fahrern die mittlere Laufleistungserwartung etwa 100.000 Kilometer beträgt. Bei den defensiven Fahrern wird das Getriebe hingegen eine mittlere Laufleistungserwartung haben, die deutlich höher ist, und bspw. im Bereich von 300.000 oder 400.000 Kilometern liegen kann.

Dies führt dazu, dass bei defensiven Fahrern ein Fahrzeug, das insgesamt als System eine Laufleistung von bspw. 100.000 Kilometern besitzt und wegen anderer Komponenten ausfällt, verschrottet wird, wobei das Getriebe jedoch noch für eine weitere Laufleistung von 200.000 oder 100.000 Kilometern "gut" wäre.

Dabei ist es so, dass die Konstruktion des Getriebes derart, dass auch leistungsbetonte Fahrer eine angemessene mittlere Laufleistungserwartung haben, dazu führt, dass die einzelnen Getriebeteile stärker bzw. größer dimensioniert werden. Dies trägt zu einem höheren Gewicht des Getriebes bei. Mit anderen Worten führt diese notwendige Getriebekonstruktion dazu, dass ein Großteil der Nutzer (die defensiven Fahrer) über die mittlere Laufleistung des Fahrzeugs ein unnötig hohes Gewicht mit sich "herumschleppen". Dies führt bei diesen Fahrern zu einem erhöhten Kraftstoffverbrauch und somit auch zu höheren Emissionen (bei Verbrennungsmotoren), etc.

Zur Funktionsüberwachung eines Kraftfahrzeuggetriebes ist es aus der DE 197 31 842 A1 bekannt, die Position eines positionsveränderlichen Getriebeelementes zu erfassen und anhand eines Beurteilungskriteriums zu überprüfen, ob sich das positionsveränderliche Getriebeelement in einer vorbestimmten Zielposition befindet. Dadurch kann eine Fehlfunktion auf Grund von Toleranzen vermieden und die Laufleistung verlängert werden.

Aus der eingangs genannten WO 01/61653 A1 ist es bekannt, die verbleibende Betriebsdauer durch eine Laufleistungsabschätzung zu ermitteln, um präventiv eine Wartung/Reparatur vor Erreichen des Endes der technischen Betriebsdauer, d.h. vor einem Ausfall, zu ermöglichen.

Generell ist es auch bekannt, bestimmte Parameter wie bspw. die Laufzeit eines Fahrzeugs und dessen Belastung zu überwachen, um eine gebrauchs- und zeitabhängige Schadensfrüherkennung zu ermöglichen (DE 101 61 998 A1).

So ist es bspw. bekannt, die Wartungsintervalle von Fahrzeugen variabel in Abhängigkeit von der Belastung einzelner Parameter des Fahrzeugs durchzuführen, anstelle von festgelegten Wartungsintervallen von bspw. zehn oder fünfzehntausend Kilometern.

Aus DE 102 11 103 ist ein Verfahren zur Optimierung der Lebensdauer von Komponenten und/oder Bauteilen eines Kraftfahrzeugs bekannt, wobei mindestens eine für die jeweilige Komponente und/oder das jeweilige Bauteil eines Kraftfahrzeugs lebensdauerrelevante Größe mittels eines statistischen Verfahrens beobachtet und bezüglich der Belastung klassiert wird, wobei, wenn eine Zielgröße der Belastungsklassierung einen Grenzwert überschreitet, Maßnahmen eingeleitet werden, welche die Belastung reduzieren.

Aus EP 1 004 485 ist ein Verfahren zur Anpassung einer Auslöseschwelle von Insassenschutzeinrichtungen, insbesondere in Kraftfahrzeugen, bekannt, wobei die Auslöseschwelle mit einem beschleunigungsabhängigen Wert verglichen und beim Überschreiten der Auslöseschwelle eine bestimmte oder mehrere Insassenschutzeinrichtungen ausgelöst werden, wobei die Auslöseschwelle in Abhängigkeit von der alters- und laufdauerbedingten Belastung des Fahrzeuges korrigiert wird.

Demzufolge ist es die Aufgabe der vorliegenden Erfindung, ein Verfahren zum Steuern eines Kraftfahrzeug-Antriebsstranges bzw. einen derartigen Antriebsstrang selbst anzugeben, wobei eine hohe mittlere Laufleistung bei geringem Getriebegewicht erzielbar ist.

Diese Aufgabe wird durch ein Steuerverfahren nach Anspruch 1 gelöst.

Bei dem eingangs genannten Antriebsstrang wird diese Aufgabe dadurch gelöst, dass die Steuermittel das erfindungsgemäße Verfahren durchführen.

Die Aufgabe wird auf diese Weise vollkommen gelöst.

Denn durch die Maßnahme, einen Belastungsgrenz-Parameter für jede Gangstufe individuell einzustellen, lässt sich die maximale Belastung des Getriebes in Abhängigkeit von dem erfassten Verschleiß-Parameter einstellen.

Mit anderen Worten kann die Belastungsaufnahme des Getriebes in Abhängigkeit von dem Verschleiß-Parameter eingestellt werden. Falls der Verschleiß-Parameter einen hohen Verschleiß bzw. eine hohe Ermüdung des Bauteiles des Getriebes anzeigt, wird die maximale Belastung des Getriebes verringert, um so das Bauteil des Getriebes künftig zu "schützen" bzw. geringer zu belasten.

Dies ermöglicht, das Getriebe bzw. wenigstens ein Bauteil hiervon konstruktiv so auszulegen, dass die mittlere Laufleistungserwartung nur bei einer durchschnittlichen Belastung des Getriebes erreicht wird, um ein Beispiel zu nennen. Die Auslegung kann natürlich auch so sein, dass die mittlere Laufleistungserwartung (bspw. die eingangs genannten 100.000 Kilometer) dann erreicht wird, wenn das Getriebe überdurchschnittlich, aber nicht maximal belastet wird.

Bei dieser konstruktiven Auslegung wird der Verschleiß-Parameter bei einem defensiven Fahrer vermutlich auf einem solchen Wert bleiben, dass die maximale Belastung des Getriebes nicht beschränkt wird. Bei einem leistungsbetonten Fahrer, der das Getriebe während der Laufleistung weit überdurchschnittlich belastet, kann der Verschleiß-Parameter hingegen einen solchen Wert annehmen, dass die maximale Belastung des Getriebes (eingestellt durch den Belastungsgrenz-Parameter) zu einem geeigneten Zeitpunkt reduziert wird. Die hat dann zur Folge, dass für diesen Fahrer die Leistungsaufnahme des Getriebes beschränkt wird. Dies kann in der Regel durch die Einstellung einer Begrenzung in der Leistungsabgabe des Motors erfolgen und hat auch den weiteren positiven Effekt, dass auch der Motor ggf. geschont wird. Theoretisch ist es jedoch auch denkbar, die Leistungsaufnahme durch andere Maßnahmen zu begrenzen, bspw., indem eine zwischen den Motor und das Getriebe geschaltete Trennkupplung geöffnet bzw. teilweise geöffnet wird.

Hierdurch lässt sich folglich erreichen, dass ein bis zu diesem Zeitpunkt stark beanspruchtes Getriebe dann zwangsweise von der Leistungsaufnahme her begrenzt wird, um die künftige Belastung zu reduzieren. Die Wahl des Zeitpunktes und das Maß der Verringerung der maximalen Belastung werden vorzugsweise so gewählt, dass die mittlere Laufleistungserwartung mit dem Getriebe bei jeder Art von Fahrer erfüllt wird. Im Extremfall kann die mittlere Laufleistungserwartung punktgenau auf eine bestimmte Laufleistung durch das erfindungsgemäße Verfahren "nachjustiert" werden.

Von besonderem Vorzug ist es, wenn der Verschleiß-Parameter des Getriebes während dessen Laufleistung wiederholt, insbesondere kontinuierlich, erfasst und der Belastungsgrenz-Parameter wiederholt in Abhängigkeit hiervon neu eingestellt wird.

Bei einer derartigen wiederholten, insbesondere kontinuierlichen Erfassung und Einstellung der fraglichen Parameter kann, wie bereits oben erwähnt, die Laufleistungserwartung des Getriebes relativ exakt nach der Art eines Regelkreises eingestellt werden, mit dem Ziel, einen eigensicheren, schadensfreien Betrieb des Fahrzeugs auch ohne Durchführung von Inspektionsintervallen zu erreichen.

Bspw. kann die mittlere Laufleistungserwartung auf einen bestimmten Wert eingestellt werden, der einer mittleren Beanspruchung durch einen Fahrer entspricht.

Sofern das Getriebe bzw. ein Teil hiervon von Anfang an überdurchschnittlich beansprucht wird, wird ab einem bestimmten Zeitpunkt bzw. gleich von Beginn an die maximale Belastung des Getriebes, also die Belastungsgrenze, sozusagen "präventiv" verringert. Sofern die Beanspruchung des Getriebes bzw. des Getriebeteils fortgesetzt überdurchschnittlich ist, wird die Belastungsgrenze immer mehr heruntergesetzt, so dass auch ein leistungsbetonter Fahrer letztlich keine deutlich höhere Ausfallrate bis zur mittleren Laufleistungserwartung hat als ein defensiver Fahrer.

Bei einem defensiven Fahrer würde die Belastungsgrenze über die Laufleistung vermutlich gar nicht reduziert werden.

Für den leistungsbetonten Fahrer bedeutet dies natürlich entweder in Stufen oder kontinuierlich eine Verringerung der zur Verfügung stehenden Leistung. Dies kann anfangs so gering sein, dass ein Fahrer dies nicht merkt. Im Extremfall kann die Belastungsgrenze jedoch auch so weit reduziert werden, dass dies deutlich spürbar wird bzw. eine entsprechende Signalisierung an den Fahrer erfolgt.

Gemäß einer besonders bevorzugten Ausführungsform wird der Verschleiß-Parameter in einem Kraftfahrzeug-Steuergerät gespeichert. Dabei ist der Verschleiß-Parameter ein Parameter, der vorzugsweise ständig aktualisiert wird.

Gemäß einer weiteren bevorzugten Ausführungsform wird der Belastungsgrenz-Parameter von einem Kraftfahrzeug-Steuergerät automatisch eingestellt.

Obgleich es theoretisch auch denkbar ist, dass der Belastungsgrenz-Parameter im Rahmen von regelmäßigen Wartungen "von Hand" durch Programmierung in einer Werkstatt oder Ähnliches eingestellt wird, so ist es doch bevorzugt, wenn der Belastungsgrenz-Parameter während der Laufleistung automatisch von dem Kraftfahrzeug-Steuergerät in Abhängigkeit von dem Verschleiß-Parameter eingestellt wird.

Gemäß einer weiteren insgesamt bevorzugten Ausführungsform wird für zumindest einige der Gangstufen ein separater Verschleiß-Parameter erfasst.

Durch diese Maßnahme kann die Gruppe von Verschleiß-Parametern für die einzelnen Gangstufen die Belastung des Getriebes genauer reflektieren.

Während bei der Erfassung nur eines einzelnen Verschleiß-Parameters bspw. für das gesamte Getriebe nur eine summarische oder mittlere Beanspruchung des Getriebes darstellbar ist, ist bei der bevorzugten Ausführungsform Folgendes möglich. Bspw. kann erfasst werden, wenn ein Fahrer eine bestimmte Gangstufe besonders stark beansprucht, also bspw. im Stadtverkehr ständig in der zweiten Gangstufe fährt. In diesem Fall stellt der Verschleiß-Parameter für die zweite Gangstufe eine höhere Beanspruchung dar als der Verschleiß-Parameter für die dritte Gangstufe. Umgekehrt kann es bei den Fahrern, die hauptsächlich auf der Autobahn fahren, sein, dass der Verschleiß-Parameter für die höchste Gangstufe bereits eine relativ hohe Beanspruchung reflektiert, während die Verschleiß-Parameter für die unteren Gangstufen nur eine geringe Beanspruchung anzeigen. Durch diese differenzierte Darstellung des Getriebeverschleißes kann eine optimierte Begrenzung der maximalen Belastung des Getriebes eingestellt werden.

Von besonderem Vorzug ist es insbesondere, wenn das Getriebe wenigstens ein Zahnrad aufweist und wenn für das Zahnrad ein separater Verschleiß-Parameter erfasst wird.

Bei dieser Ausführungsform kann die Belastungsgrenze in Abhängigkeit von dem Verschleiß-Parameter eines einzelnen Zahnrades festgesetzt werden.

Dabei ist es besonders bevorzugt, wenn der Verschleiß-Parameter für eine Gangstufe bzw. das Zahnrad einen Wert proportional zu der Anzahl der Überrollungen während der Laufleistung des Getriebes ist.

Hierbei wird der Verschleiß-Parameter nicht davon abhängig gemacht, wie groß die Fahrleistung des Fahrzeugs ist, sondern davon, wie stark das jeweilige Zahnrad tatsächlich beansprucht worden ist.

Von besonderem Vorzug ist es, wenn der Verschleiß-Parameter für eine Gangstufe bzw. das Zahnrad proportional zu der Anzahl der Überrollungen während der Laufleistung des Getriebes und proportional zu dem jeweils über die Gangstufe bzw. das Zahnrad übertragenen Drehmoment ist.

Somit wird für den Verschleiß-Parameter nicht nur berücksichtigt, wie viele Überrollungen der Radsatz bzw. das Zahnrad mitgemacht hat, sondern auch, wie viel Drehmoment es dabei übertragen hat.

Im einfachsten Fall wird ein mittleres über das Zahnrad jeweils übertragenes Drehmoment als konstantes Drehmoment angenommen. Bspw. bei einem Zahnrad für einen bestimmten Radsatz wird als das übertragene Drehmoment ein fester Wert angenommen, der für diese Gangstufe charakteristisch ist. Da in einem Kraftfahrzeug-Steuergerät jedoch das jeweils übertragene Drehmoment in der Regel bekannt ist (bspw. durch Stellung der Drosselklappe oder Ähnliches), kann das übertragene Drehmoment auch aufintegriert werden. Um ein Beispiel zu nennen, könnte während einer Fahrt in einer bestimmten Gangstufe die Anzahl der Überrollungen erfasst werden, die von der Geschwindigkeit des Fahrzeugs abhängt, und es könnte gleichzeitig das jeweils übertragene Drehmoment erfasst werden, das vom Motordrehmoment und von der Motorbeschleunigung abhängt (die Motorbeschleunigung ist dabei die zeitabhängige Änderung der Motordrehzahl). Diese beiden Variablen (das heißt Überrollungen und Drehmoment) können dann zur Bestimmung des Verschleiß-Parameters multipliziert und aufintegriert werden.

Bei dieser Ausführungsform wird folglich berücksichtigt, wie stark das jeweilige Zahnrad tatsächlich belastet wird.

Ferner ist es vorteilhaft, wenn das Getriebe wenigstens eine Welle aufweist und wenn für die Welle ein separater Verschleiß-Parameter erfasst wird.

Hierbei kann ein weiteres wichtiges Bauteil des Getriebes auf den Verschleiß bzw. auf die über die Laufleistung des Fahrzeugs aufakkumulierte Belastung hin überwacht werden. Ggf. wird die Belastungsgrenze so verringert, dass die Welle weniger belastet wird.

Dabei ist es ferner vorteilhaft, wenn das Getriebe wenigstens ein Drehlager, insbesondere Wälzlager, aufweist und wenn für das Drehlager ein separater Verschleiß-Parameter erfasst wird.

Bei dieser Ausführungsform kann folglich auch der Verschleiß bzw. die Belastung eines Drehlagers erfasst werden.

Vorzugsweise ist dabei der Verschleiß-Parameter für die Welle und/oder das Drehlager proportional zu der Anzahl der Umdrehungen der Welle bzw. des Drehlagers.

Dabei ist zu berücksichtigen, dass die Zahnräder der Konstantübersetzung wie auch die Zahnräder eines Final-Drive bei einem Front-Quer-Getriebe ständig Leistung zu übertragen haben, unabhängig vom eingelegten Gang.

Insgesamt ist es vorteilhaft, wenn der Belastungsgrenz-Parameter ein Wert proportional zu dem maximalen, von dem Motor an das Getriebe übertragenen Drehmoment ist.

Das Drehmoment ist für die Belastung von Zahnrädern von besonderer Bedeutung, da bei einem Zahnrad mit steigender Belastung Ermüdungserscheinungen auftreten bzw. eine Grübchenbildung oder Ähnliches stattfinden können.

Gemäß einer weiteren bevorzugten Ausführungsform ist der Belastungsgrenz-Parameter ein Wert proportional zu der maximalen, von dem Motor an das Getriebe übertragenen Drehzahl.

Die Drehzahl ist insbesondere für Wellen und Drehlager ein Parameter, der die jeweilige Belastung charakterisiert. Demzufolge kann dann, wenn der Verschleiß-Parameter für eine Welle oder ein Drehlager einen bestimmten Wert erreicht, die maximale Eingangsdrehzahl des Getriebes so begrenzt werden, dass die fragliche Welle bzw. das fragliche Drehlager künftig nicht mehr so stark belastet wird.

Ferner ist es vorteilhaft, wenn der Belastungsgrenz-Parameter ein Wert proportional zu der maximalen, von dem Motor an das Getriebe übertragenen Drehbeschleunigung ist.

Bei dieser Ausführungsform geht somit auch die Drehbeschleunigung, also die erste Ableitung der Drehzahl in die Bestimmung des Belastungsgrenz-Parameters ein. In weiterer Ausführung kann dies natürlich auch für die zweite Ableitung der Drehzahl gelten.

Die zur Erfassung des Verschleiß-Parameters jeweils erforderlichen Sensoren sind bei automatisierten Getrieben in der Regel ohnehin vorhanden. So ist in der Regel in dem Kraftfahrzeug-Steuergerät zur Steuerung des Antriebsstranges eine Information darüber vorhanden, welche Gangstufe gerade im Eingriff steht. Ferner ist Information über das jeweils übertragene Drehmoment vorhanden, bspw. über die Stellung einer Drosselklappe oder Ähnliches. Auch die Drehzahl des Motors ist in der Regel ein ständig erfasster Messwert.

Der Verschleiß-Parameter kann dann im Rahmen einer eigenen Software-Routine im Steuergerät des Antriebsstranges ständig erfasst werden, indem die fraglichen Werte gemessen und geeignet verarbeitet werden, um die jeweiligen Verschleiß-Parameter für Radsätze, Zahnräder, Wellen und/oder Drehlager zu bestimmen.

Somit ist zur Realisierung des erfindungsgemäßen Verfahrens lediglich etwas Rechenleistung in dem Steuergerät sowie Speicherplatz für den bzw. die Verschleiß-Parameter sowie den bzw. die zugehörigen Belastungsgrenz-Parameter notwendig. Eigene separate Hardware ist im Regelfall nicht bereitzustellen.

Dies gilt allenfalls dann, wenn das erfindungsgemäße Verfahren auch auf Handschaltgetriebe übertragen werden soll. Bei solchen Getrieben ist in der Regel keine Information darüber vorhanden, welcher Gang gerade eingelegt ist. Dies könnte dann durch zusätzliche geeignete Sensorik erfasst werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Darstellung des Verschleiß-Parameters und des Belastungsgrenz-Parameters für ein Getriebe bzw. ein Getriebebauteil in Abhängigkeit von der Laufleistung zur Darstellung einer ersten Ausführungsform des erfindungsgemäßen Verfahrens;
- Fig. 2: eine der Fig. 1 vergleichbare Darstellung einer weiteren Ausführungsform des erfindungsgemäßen Verfahrens;
- Fig. 3: eine schematische Darstellung eines automatisierten Antriebsstranges; und
- Fig. 4: eine schematische Darstellung der in einem Steuergerät des erfindungsgemäßen Antriebsstranges gespeicherten Verschleiß- und Belastungsgrenz-Parameter.

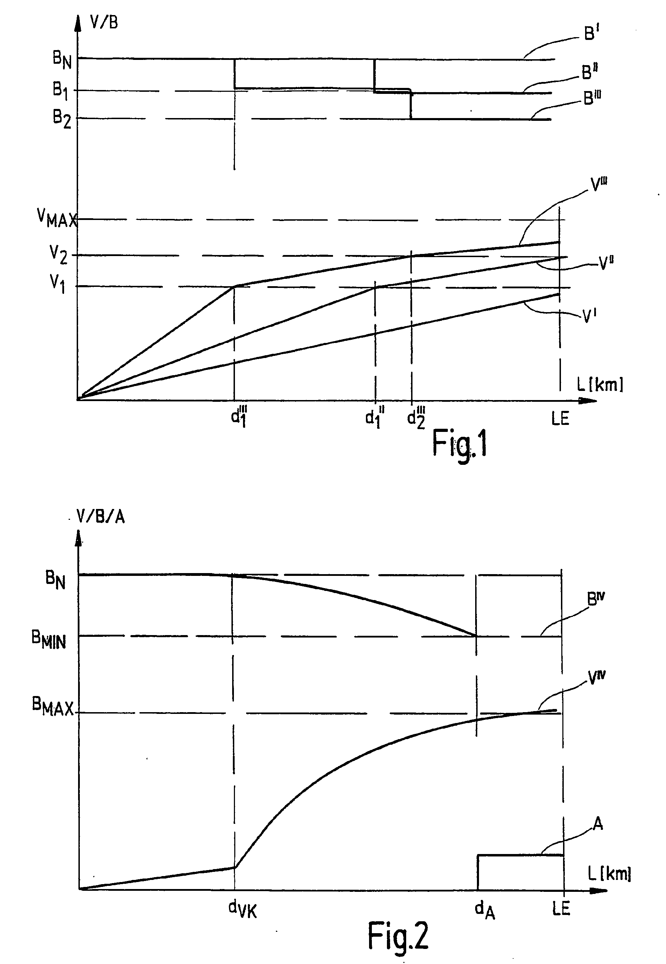

Fig. 1 ist ein Diagramm eines Verschleiß-Parameters V und eines Belastungsgrenz-Parameters B eines Bauteils eines Getriebes über der Laufleistung L in Kilometern.

Die Laufleistung L ist im vorliegenden Zusammenhang gleichbedeutend mit der Nutzungsdauer bzw. der Kilometerleistung des Fahrzeugs, in das das Getriebe eingebaut ist.

In Fig. 1 ist eine mittlere Laufleistungserwartung LE dargestellt. Diese kann bspw. 100.000 Kilometer betragen, um auf das eingangs genannte Beispiel zurückzugreifen. Die Laufleistungserwartung LE kann jedoch auch bspw. 200.000 Kilometer betragen. Sie hängt im Wesentlichen davon ab, für welche mittlere Laufleistungserwartung das Fahrzeug ausgelegt ist, in das das Getriebe eingebaut ist.

Der Verschleiß-Parameter V und der Belastungsgrenz-Parameter B können sich auf ein Teil eines Getriebes beziehen, bspw. auf einen Radsatz, auf ein einzelnes Zahnrad, auf eine Welle, oder ein Drehlager des Getriebes. Die Parameter können sich jedoch auch auf das Getriebe insgesamt beziehen. Dies kann bspw. durch rechnerische Zusammenfassung der einzelnen Verschleiß-Parameter der relevanten Bauteile des Getriebes erfolgen. Alternativ kann sich der Verschleiß-Parameter des Getriebes auch einfach an dem verschleißanfälligsten Bauteil des Getriebes ausrichten.

Bei B_{N} ist der maximale Belastungsgrenz-Parameter dargestellt. Der maximale Belastungsgrenz-Parameter B_{N} ist so gewählt, dass das Getriebe maximal belastet werden darf, in Übereinstimmung mit der Spezifikation bzw. dem Datenblatt des Getriebes bei Fahrzeugauslieferung.

Bei der Belastung des Getriebes kann es sich bspw. um einen Wert proportional zu dem maximalen Eingangsmoment des Getriebes handeln. Der Belastungsgrenz-Parameter kann gleichzeitig oder alternativ hierzu auch ein Wert proportional zu der maximalen Eingangsdrehzahl des Getriebes sein. Auch die Drehbeschleunigung kann in den Belastungsgrenz-Parameter eingehen, sofern dies gewünscht ist.

In Fig. 1 ist ferner gezeigt, dass der Belastungsgrenz-Parameter in zwei Stufen reduzierbar ist, auf einen Wert B₁, der kleiner ist als B_{N}, und auf einen Wert B₂, der kleiner ist als B₁.

Ferner zeigt Fig. 1 einen maximalen Verschleiß-Parameter Vₘₐₓ. Der maximale Verschleiß-Parameter Vₘₐₓ ist ein solcher Wert des Verschleiß-Parameters V, der bei Erreichen der mittleren Laufleistungserwartung LE maximal vorhanden sein sollte.

Mit anderen Worten, sollte das Bauteil den maximalen Verschleiß-Parameter Vₘₐₓ vor Erreichen der mittleren Laufleistungserwartung LE haben, ist die Wahrscheinlichkeit eines Ausfalls des Getriebes erhöht. Dies kann dazu führen, dass das Getriebe allein auf Grund von Verschleiß- bzw. Ermüdungserscheinungen vor Erreichen der mittleren Laufleistungserwartung ausfällt.

Der Verschleiß-Parameter V ist ein Parameter, der bei der vorliegenden Ausführungsform des erfindungsgemäßen Verfahrens während der Laufleistung L kontinuierlich erfasst wird.

Im Falle eines Radsatzes als Getriebebauteil, kann sich der Verschleiß-Parameter V bspw. als Wert proportional zu der Anzahl der Überrollungen von einem der Zahnräder des Radsatzes darstellen. Ferner kann der Verschleiß-Parameter V ein Wert proportional zu dem jeweils über das Zahnrad übertragenen Drehmoment sein. In der vorliegenden Ausführungsform ermittelt sich der Verschleiß-Parameter durch Aufintegration des über die Laufleistung übertragenen Drehmomentes. In den Verschleiß-Parameter gehen folglich ein die Anzahl der Überrollungen sowie das hierbei jeweils übertragene Drehmoment.

Sofern das Getriebebauteil eine Welle des Getriebes ist, kann der Verschleiß-Parameter sich bspw. anhand der Anzahl der Umdrehungen bemessen. Gleiches gilt dann, wenn das Getriebebauteil ein Drehlager ist. Dabei wird die Anzahl der Umdrehungen über die Laufleistung des Getriebes aufintegriert.

Bei der vorliegende Ausführungsform des erfindungsgemäßen Verfahrens sind zwei Schwellenwerte V₁ und V₂ des Verschleiß-Parameters vorgesehen. Der Schwellenwert V₂ ist kleiner als der maximale Verschleiß-Parameter Vₘₐₓ. Der zweite Schwellenwert V₁ ist kleiner als der erste Schwellenwert V₂.

In Fig. 1 ist der Verschleiß-Parameter V' von einem Bauteil eines Getriebes dargestellt, das in ein Fahrzeug eingebaut ist, das von einem sehr defensiven Fahrer gefahren wird. Es ist zu erkennen, dass der Verschleiß-Parameter V' bis zum Erreichen der mittleren Laufleistungserwartung LE den Schwellenwert V₁ nicht erreicht. Demzufolge verbleibt der zugeordnete Belastungsgrenz-Parameter B' für die gesamte Laufleistung L bis zum Erreichen der mittleren Laufleistungserwartung LE auf dem Maximalwert B_{N}. Der defensive Fahrer könnte das Getriebe somit selbst kurz vor LE noch maximal gemäß den ursprünglichen Spezifikationen belasten.

Fig. 1 zeigt ferner ein Verschleiß-Parameter V", der einem Bauteil eines Getriebes zugeordnet ist, das in ein Fahrzeug eingebaut ist, das von einem Fahrer betrieben wird, der das Fahrzeug insgesamt mehr belastet (im Vorliegenden soll dies der Einfachheit halber durch die Bezeichnung "leistungsbetonterer Fahrstil" bezeichnet werden. Auf Grund des leistungsbetonteren Fahrstils des Fahrers verschleißt das Getriebebauteil schneller, was sich in einer größeren Steigung der Verschleiß-Parameter-Kurve V" zeigt. Demzufolge erreicht der Verschleiß-Parameter V" den Schwellenwert V₁ bereits bei einer Laufleistung d₁", die bspw. etwa die Hälfte der mittleren Laufleistungserwartung LE betragen kann. Auf Grund des Erreichens des Schwellenwertes V₁ wird der Belastungsgrenz-Parameter B" bei d₁'' auf den Wert B₁ verringert. Demzufolge kann ab d₁'' das Getriebe bzw. das Getriebebauteil nicht mehr so stark belastet werden. Dies äußert sich darin, dass der Verschleiß-Parameter V" ab d₁" nicht mehr so stark ansteigt. Dies führt dazu, dass der Verschleiß-Parameter V" den Schwellenwert V₂ bei Erreichen der mittleren Laufleistungserwartung LE noch nicht erreicht hat. Demzufolge verbleibt der Belastungsgrenz-Parameter B" bis LE auf dem Wert B₁.

Bei V"' ist der Verschleiß-Parameter eines stark leistungsbetonten Fahrers gezeigt. Demzufolge verläuft der Verschleiß-Parameter V"' von Beginn an noch steiler. Der Schwellenwert V₁ wird bereits bei d₁''' erreicht, einem Wert, der im vorliegenden Fall etwa ein Drittel bis ein Viertel der Laufleistungserwartung LE beträgt. Demzufolge wird der zugeordnete Belastungsgrenz-Parameter B"' bei d₁''' auf B₁ verringert. Das Getriebebauteil wird demzufolge geringer belastet als zu Anfang, was sich in einer geringeren Steigung der Verschleiß-Parameter-Kurve zeigt. Allerdings erreicht der Verschleiß-Parameter V"' bereits bei d₂''', also vor LE, den weiteren Schwellenwert V₂. Dies führt dazu, dass bei d₂''' der Belastungsgrenz-Parameter B"' von B₁ auf B₂ verringert wird. Dies führt dazu, dass die maximal zulässige Belastung des Getriebebauteils noch weiter verringert wird. Demzufolge nimmt der Verschleiß dieses Bauteils ab d₂''' nicht mehr so stark zu, was sich in einer noch geringeren Steigung der Verschleiß-Parameter-Kurve V"' zeigt. Durch die nochmalige Absenkung des Belastungsgrenz-Parameters auf B₂ wird somit der maximale Verschleiß-Parameter V_{MAX} bei Erreichen der mittleren Laufleistungserwartung LE trotz maximaler Leistungsanforderung durch den Fahrer über die gesamte Laufleistung nicht erreicht.

Durch das erfindungsgemäße Verfahren wird folglich eine Regelung der Laufleistungserwartung implementiert. Selbst dann, wenn das Getriebebauteil von Beginn an überdurchschnittlich belastet wird (wie bei V'''), kann durch Begrenzung der maximalen Belastung des Getriebebauteils erreicht werden, dass die mittlere Laufleistungserwartung LE dennoch erreicht wird. Der Fahrer kann demzufolge im weiteren Verlauf der Laufleistung das Getriebebauteil nicht mehr gemäß der maximalen ursprünglichen Spezifikation belasten. Dies kann sich darin äußern, dass ihm trotz maximaler Leistungsanforderung (bspw. durchgedrücktes Gaspedal) nicht das volle Drehmoment des Motors zur Verfügung gestellt wird. So kann das maximale Eingangsmoment durch den Belastungsgrenz-Parameter verringert werden. Alternativ oder zusätzlich kann auch die maximale Drehzahl begrenzt werden.

Bei der in Fig. 1 gezeigten Ausführungsform des erfindungsgemäßen Verfahrens sind für den Verschleiß-Parameter zwei Schwellenwerte V₁, V₂ und entsprechend zwei Stufen von Belastungsgrenz-Parametern B₁, B₂ vorgesehen. Es versteht sich jedoch, dass statt dessen auch nur ein Schwellenwert V₁ vorgesehen sein kann. Alternativ können auch mehr als zwei Schwellenwerte des Verschleiß-Parameters vorgesehen sein, bei entsprechender Erhöhung der Anzahl der Stufen der Verringerung des Belastungsgrenz-Parameters B.

Ferner ist auch eine kontinuierliche Regelung nach folgender Systematik denkbar. Dabei geht man davon aus, dass ein durchschnittlicher Fahrer (oder im Extremfall sogar ein besonders defensiver Fahrer) bei Erreichen der mittleren Laufleistungserwartung LE den maximalen Verschleiß-Parameter V_{MAX} erreicht hat. Dies kann durch entsprechende Dimensionierung bei der Konstruktion des Getriebeteils erfolgen.

Bei allen Fahrern, die das Getriebeteil stärker belasten, wird der Verschleiß-Parameter am Anfang stärker ansteigen. Durch Regelung des Belastungsgrenz-Parameters kann dann erreicht werden, dass auch ein potenziell leistungsbetonter Fahrer bei Erreichen der mittleren Laufleistungserwartung LE genau den Wert Vₘₐₓ erreicht. Diese Art von erfindungsgemäßem Verfahren führt dazu, dass das Getriebe bzw. das Getriebeteil im Hinblick auf die konstruktive Auslegung bei Erreichen der mittleren Laufleistungserwartung vollkommen "ausgenutzt" wird. Es versteht sich, dass in dieser Art von Verfahren davon ausgegangen wird, dass bei Erreichen der mittleren Laufleistungserwartung LE das Getriebeteil bzw. das Getriebe insgesamt ausgetauscht wird, da dann die Wahrscheinlichkeit eines Ausfalls weit überproportional ansteigen würde.

In der Fig. 1 ist der Verschleiß-Parameter jeweils schematisiert als lineare Funktion dargestellt. In der Praxis versteht sich, dass der Verschleiß-Parameter schrittweise anwachsen wird, und zwar immer dann, wenn ein bestimmtes Zahnrad bzw. ein bestimmter Radsatz für eine bestimmte Gangstufe geschaltet ist und demzufolge beansprucht wird. In Phasen hingegen, in denen diese Gangstufe nicht geschaltet ist, erfolgt keine oder im Wesentlichen keine Beanspruchung, so dass der Verschleiß-Parameter im Wesentlichen konstant bleibt.

Es versteht sich aus dem Gesamtzusammenhang heraus jedoch, dass der Verschleiß-Parameter ein Wert ist, der mit der Laufleistung des Kraftfahrzeuges ansteigt.

Bei dem Verschleiß-Parameter für Radsätze/Zahnräder kann zudem zwischen einem Verschleiß-Parameter für den Zug-Betrieb und einem Verschleiß-Parameter für den Schub-Betrieb unterschieden werden. Hierbei würde man das jeweils im Zug-Betrieb übertragene Drehmoment bspw. ermitteln durch die Stellung einer Drosselklappe des Motors des Kraftfahrzeuges oder durch ein vergleichbares Signal.

Im Schub-Betrieb, in dem die Zähne der Zahnräder des Radsatzes genau in der anderen Richtung beansprucht werden, könnte man das Schub-Moment bspw. über andere an sich bekannte Algorithmen erfassen.

Im Folgenden wird jedoch der Einfachheit halber davon ausgegangen, dass für Zahnräder lediglich der die Zug-Beanspruchung darstellende Verschleiß-Parameter für das erfindungsgemäße Verfahren herangezogen wird.

Fig. 2 zeigt ein der Fig. 1 vergleichbares Diagramm und stellt eine kontinuierliche Regelung eines Belastungsgrenz-Parameters B^{IV} anhand eines Verschleiß-Parameters V^{IV} dar, gemäß einer alternativen Ausführungsform des erfindungsgemäßen Verfahrens. Man erkennt dabei aus der Kurve des Verschleiß-Parameters V^{IV}, dass das Getriebeteil zu Anfang relativ gering belastet wird (bspw. von einem defensiven Fahrer). Zu einem Zeitpunkt d_{VK} wird das Fahrzeug jedoch verkauft. Das Fahrzeug wird ab diesem Zeitpunkt von einem leistungsbetonteren Fahrer gefahren, so dass die Steigung der Verschleiß-Parameter-Kurve ansteigt. Demzufolge wird ab d_{VK} auch der Belastungsgrenz-Parameter B^{IV} allmählich abgesenkt. Die Belastung durch den Fahrer ist jedoch trotzdem so hoch, dass der Belastungsgrenz-Parameter B^{IV} vor Erreichen der mittleren Laufleistungserwartung LE einen Minimalwert Bₘᵢₙ erreicht. Der Wert Bₘᵢₙ stellt einen Zustand dar, bei dem die Belastung des Getriebes so weit begrenzt ist, so dass gerade noch ein angemessener Betrieb des Kraftfahrzeuges möglich ist. Eine weitere Verringerung der Belastungsgrenze würde jedoch dazu führen, dass das Fahrzeug nicht mehr adäquat bewegt werden könnte.

Demzufolge verbleibt der Belastungsgrenz-Parameter B^{IV} ab der Laufleistung d_{A} auf dem Wert Bₘᵢₙ.

Um dem Fahrer jedoch deutlich zu machen, dass er das Getriebe bereits so stark belastet hat, dass eine bestimmte Grenze (Bₘᵢₙ) erreicht ist und dass er demzufolge bei fortgesetzter starker Belastung damit zu rechnen hat, dass das Getriebe vorzeitig ausfällt, wird ein entsprechendes Alarmsignal A bei d_{A} abgegeben, um dies dem Fahrer deutlich zu signalisieren.

Es versteht sich, dass die Auslegung insgesamt so gewählt sein sollte, dass ein solcher Zustand nur bei Fahrern auftritt, die das Getriebe bzw. das Getriebeteil weit überdurchschnittlich belasten. Bei der überwiegenden Mehrzahl aller Fahrer sollte hingegen dieser minimale Belastungsgrenz-Parameter Bₘᵢₙ niemals erreicht werden.

In den Ausführungsformen des erfindungsgemäßen Verfahrens gemäß Fig. 1 und 2 wird generell davon ausgegangen, dass der Verschleiß-Parameter V sich nur erhöhen kann. Dies entspricht zwar auch soweit der Realität als Verschleiß in der Regel nicht rückgängig gemacht werden kann.

Es könnte jedoch eine Situation auftreten, dass ein Fahrzeug zu Anfang der Laufleistung besonders stark belastet wird, so dass frühzeitig die erfindungsgemäßen Regelmechanismen eingreifen, um die Belastungsgrenze des Getriebes bzw. des Getriebeteils abzusenken.

Falls das Fahrzeug dann bspw. an einen besonders defensiven Fahrer verkauft wird, würde der Verschleiß-Parameter nur noch sehr unterproportional ansteigen. Sofern dies durch einen geeigneten Algorithmus überwacht wird, könnte dann das Absenken des Belastungsgrenz-Parameters wieder aufgehoben werden. Dies würde dazu führen, dass der defensive Fahrer zumindest wieder die Möglichkeit erhält, das Getriebe maximal zu belasten (bspw. in Notsituationen).

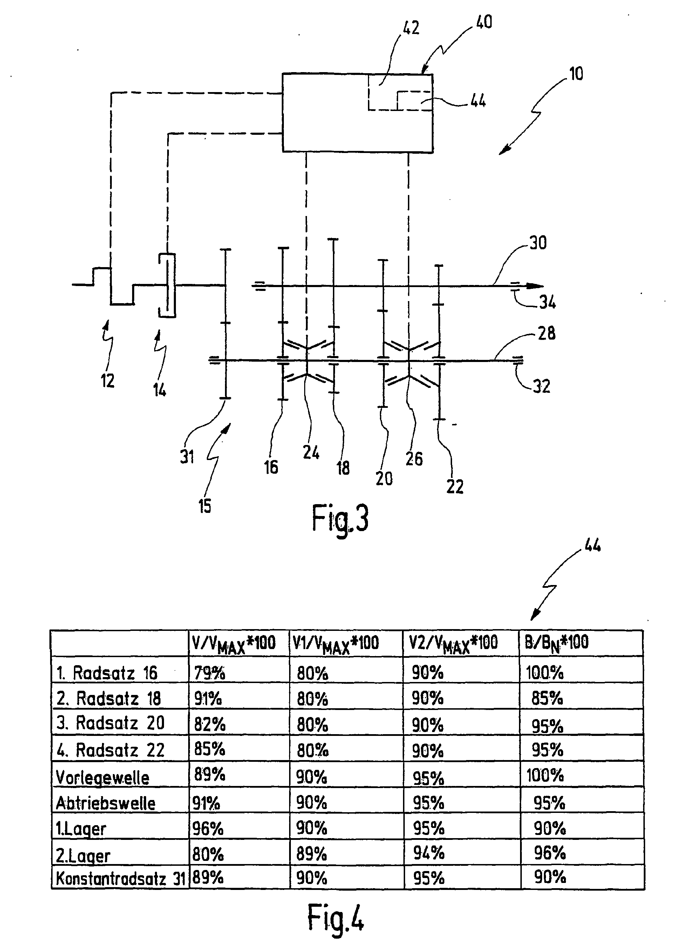

Fig. 3 zeigt eine schematische Darstellung eines automatisierten Antriebsstranges 10.

Der Antriebsstrang 10 weist einen Verbrennungsmotor 12, eine Anfahr- und Trennkupplung 14 sowie ein automatisiertes Schaltgetriebe 15 auf.

Das Schaltgetriebe 15 ist als Stirnradgetriebe mit einer Mehrzahl von Radsätzen 16, 18, 20, 22 entsprechend einer Mehrzahl von Gangstufen ausgestattet. Eine erste Schaltmuffe 24 dient dazu, alternativ den Radsatz 16 oder den Radsatz 18 zu schalten. Eine zweite Schaltmuffe 26 dient dazu, alternativ den Radsatz 20 oder den Radsatz 22 zu schalten.

Das automatisierte Schaltgetriebe 15 weist ferner eine Vorgelegewelle 28 und eine Abtriebswelle 30 auf, die über einen Konstantradsatz 31 stetig verbunden sind. Die Vorgelegewelle 28 ist mittels mehrerer Drehlager (Wälzlager) gelagert, von denen eines bei 32 gezeigt ist. Die Abtriebswelle 30 ist mittels mehrerer Drehlager gelagert, von denen eines bei 34 schematisch dargestellt ist.

Ferner ist in Fig. 3 ein Steuergerät 40 dargestellt. Das Steuergerät 40 ist sowohl mit dem Verbrennungsmotor 12, der Anfahr- und Trennkupplung 14 sowie dem automatisierten Schaltgetriebe 15 verbunden.

Das Steuergerät 40 kann als einheitliches Steuergerät aufgebaut sein. Es kann jedoch auch so implementiert sein, dass dezentrale Steuergeräte für den Verbrennungsmotor 12 einerseits und das automatisierte Schaltgetriebe 15 (und ggf. die Trennkupplung 14) andererseits vorgesehen sind und dass ein übergeordnetes Steuergerät mit diesen beiden dezentralen Steuergeräten verbunden ist.

Das Steuergerät 40 erfasst die Abtriebsdrehzahl des Verbrennungsmotors 12 sowie das von dem Verbrennungsmotor 12 abgegebene Drehmoment. Ferner stellt es für diese beiden Variablen jeweils einen Grenzwert bereit.

Auch weitere Variablen des Verbrennungsmotors 12 können ggf. gemessen bzw. gesteuert (begrenzt) werden.

Das Steuergerät 40 betätigt ferner die Schaltmuffen 24, 26 zum Ein- und Auslegen von Gangstufen des Schaltgetriebes 15. Das Steuergerät 40 "kennt" demzufolge den jeweiligen Zustand des Schaltgetriebes 15.

Bei 42 ist schematisch ein Steuerprozess innerhalb des Steuergerätes 40 dargestellt, der das erfindungsgemäße Verfahren implementiert.

Dabei wird für die Getriebeteile jeweils separat ein Verschleiß-Parameter erfasst und ein zugeordneter Belastungsgrenz-Parameter eingestellt. Diese Parameter befinden sich in einem Registerabschnitt 44 des Steuergerätes 40.

Der Registerabschnitt 44 ist in Fig. 4 schematisch dargestellt. In Fig. 4 ist dargestellt, dass der Verschleiß-Parameter der einzelnen Getriebeteile jeweils bereits einen fortgeschrittenen Wert besitzt, und zwar in dem Bereich zwischen 79 und 96 %. Der Verschleiß-Parameter V ist dabei als prozentualer Wert des maximalen Verschleiß-Parameter Vₘₐₓ angegeben.

Bspw. weist der Verschleiß-Parameter des ersten Radsatzes 16 einen Wert von 79 % auf. Die weiteren Radsätze 18, 20, 22 weisen jeweils Verschleiß-Parameter von 91 %, 82 % bzw. 85 % auf. Der Verschleiß-Parameter des Konstantradsatzes 31 ist dagegen höher (bspw. 89 %).

Ferner ist zu erkennen, dass das erfindungsgemäße Verfahren gemäß der Ausführungsform der Fig. 1 implementiert ist, mit einem ersten Schwellenwert V₁ und einem zweiten Schwellenwert V₂. Auch die Schwellenwerte V₁, V₂ sind als prozentuale Werte angegeben. Für die Radsätze 16 bis 22 beträgt der Schwellenwert V₁ jeweils 80 % des maximalen Verschleiß-Parameters. Der Schwellenwert V₂ beträgt 90 % des maximalen Verschleiß-Parameters Vₘₐₓ.

Der erste Radsatz 16 weist einen Verschleiß-Parameter von 79 % auf, der demzufolge unterhalb von V₁ liegt. Demzufolge wird der zugeordnete Belastungsgrenz-Parameter B auf 100 % eingestellt. Der Belastungsgrenz-Parameter B ist in Fig. 4 jeweils ebenfalls prozentual angegeben, bezogen auf den maximalen Belastungsgrenz-Parameter B_{N}.

Der zweite Radsatz 18 ist bei dem Getriebe deutlich stärker belastet worden. Der Verschleiß-Parameter liegt bei 91 % und somit bereits oberhalb von V₂. Demzufolge ist der Belastungsgrenz-Parameter auf 85 % abgesenkt.

Der dritte Radsatz und der vierte Radsatz liegen jeweils zwischen V₁ und V₂, so dass die Belastungsgrenz-Parameter jeweils 95 % betragen.

Es versteht sich, dass die Wahl der Schwellenwerte V₁, V₂ (auf 80 % bzw. 90 %) und die Wahl der Absenkung des Belastungsgrenz-Parameters auf 95 % bzw. 85 % lediglich beispielhaft zu verstehen sind.

In dem Registerabschnitt 44 der Fig. 4 ist ferner gezeigt, dass auch die Wellen 28, 30 und deren Lager 32, 34 hinsichtlich des Verschleißes überwacht werden.

Hierbei sind Schwellenwerte V₁ von 90 % und V₂ von 95 % eingestellt. Die Stufen B₂, B₁ des Belastungsgrenz-Parameters B sind auf 95 % und 90 % eingestellt.

In Fig. 4 sind die Verschleiß-Parameter für die erste Vorgelegewelle 28 und das erste Lager 32 als getrennte Werte dargestellt. In der Regel wird jedoch für beide jeweils nur ein Wert des Verschleiß-Parameters geführt werden, da für beide Bauteile die Anzahl der Umdrehungen üblicherweise maßgeblich für den Verschleiß bzw. die Ermüdung ist. Gleiches gilt natürlich für die Abtriebswelle 30 und das zugeordnete Lager 34.

Das Verhältnis der einzelnen Getriebebauteile untereinander ist folgendermaßen. Bei den Radsätzen 16 bis 22 kann der Belastungsgrenz-Parameter jeweils individuell eingestellt werden. So kann es bspw. sein, dass der erste Radsatz 16 zu einem bestimmten Zeitpunkt der Laufleistung noch zu 100 % belastet werden kann, der zweite Radsatz 18 jedoch nur noch zu 85 %, wie es in Fig. 4 dargestellt ist.

Demzufolge kann das Steuergerät 40 dann, wenn der erste Radsatz eingeschaltet ist, nach wie vor die maximale Belastung am Eingang des Getriebes 15 zulassen, bei Einschalten des zweiten Radsatzes 18 jedoch die Belastung begrenzen (durch Begrenzen des Drehmomentes und/oder der Eingangsdrehzahl des Getriebes 15).

Die Wellen 28, 30 bzw. Lager 32, 34 werden jedoch bei Übertragen von Leistung über das Getriebe 15 generell belastet, jedoch nicht unabhängig von der eingelegten Gangstufe. Denn die Belastung der Wellen und Lager hängt in der Regel auch vom geschalteten Gang ab (es ergeben sich andere eingeleitete Kräfte aus den belasteten Radsätzen). Demzufolge richtet sich die maximale Belastung des Getriebes 15 nach dem Getriebebauteil, das bereits den höchsten Verschleiß aufweist, im Falle der Fig. 4 der Konstantradsatz 31. Dort ist der Belastungsgrenz-Parameter auf 90 % eingestellt. Dies bedeutet, dass die Belastung des Getriebes 15 generell nur noch 90 % betragen kann, unabhängig von der eingelegten Gangstufe.

Obwohl im Beispiel der Fig. 4 der erste Radsatz 16 noch zu 100 % belastbar ist, würde auch bei geschaltetem ersten Radsatz 16 die maximale Belastung des Getriebes nur 90 % betragen, und zwar wegen des Belastungsgrenz-Parameters des Konstantradsatzes 31.

Es ist demzufolge zu unterscheiden zwischen solchen Bauteilen des Getriebes (Wellen/Lager), die unabhängig von dem jeweiligen Schaltzustand Leistung übertragen, und solchen Bauteilen (Zahnräder/Radsätze), die nur im geschalteten Zustand Leistung übertragen.

Die Wellen/Lager sind zwar stets belastet. Wie oben erwähnt, hat jedoch auch die jeweils eingelegte Gangstufe einen bestimmten, wenn auch geringeren Einfluss auf die Beanspruchung der Wellen/Lager.

In vielen Fällen wird man bei einer vereinfachten Ausführungsform der vorliegenden Erfindung jedoch auch auf eine Überwachung des Verschleißes der Wellen und der Lager verzichten können und ausschließlich den Verschleiß der Radsätze überwachen. In diesem Fall wäre natürlich schließlich der jeweils errechnete Belastungsgrenz-Parameter des jeweiligen Radsatzes für die maximale Belastung des Getriebes zuständig, da man dann davon ausgehen wird, dass die ständig im Leistungsfluss befindlichen Bauteile immer zu 100 % belastet werden können.

Generell ist es auch möglich, anstelle eines Verschleiß-Parameters eines Radsatzes einen Verschleiß-Parameter von einem oder von beiden Zahnrädern des Radsatzes vorzusehen.

Ferner ist es möglich, das erfindungsgemäße Verfahren auch auf andere Arten von Antriebssträngen, bspw. Automatikgetrieben mit hydrodynamischem Drehmomentwandler, auf CVTs, auf Toroidgetriebe, auf Doppelkupplungsgetriebe etc. entsprechend anzuwenden.

Es versteht sich, dass auch der Verschleiß der Anfahr- und Trennkupplung in entsprechender Weise überwacht werden kann. Bspw. durch einen Verschleiß-Parameter, der proportional ist zu dem Integral des übertragenen Drehmomentes multipliziert mit dem jeweiligen Schlupf, so dass der Verschleiß rechnerisch ermittelt wird. Natürlich ist es auch möglich, den Verschleiß bei einer Anfahr- und Trennkupplung durch einen separaten Verschleißsensor zu erfassen, also einen Sensor, der die Belagdicke erfasst.

Generell ist es natürlich auch möglich, eine ähnliche Steuer- bzw. Regelstrategie für einen Verbrennungsmotor durchzuführen, wobei der Verschleiß-Parameter sich bspw. anhand der Drehzahl und/oder dem übertragenen Drehmoment bestimmen lässt (durch Integrieren, wie auch bei den vorherigen Ausführungsformen).

Schließlich ist es auch möglich, die Verschleiß-Parameter der einzelnen Elemente des Antriebsstranges miteinander zu kombinieren.

Bei Zahnrädern ist es zudem möglich, zwischen einer Zug- und einer Schubbelastung zu unterscheiden. Somit könnte für ein Zahnrad ein Verschleiß-Parameter für Zugbelastungen und ein weiterer Verschleiß-Parameter für Schubbelastungen vorgesehen werden.

Bei automatisierten Getrieben sind die erforderlichen Variablen zur Berechnung des Verschleiß-Parameter in der Regel ohnehin in einem Steuergerät vorhanden. Bei einem manuellen Schaltgetriebe müsste bspw. eine zusätzliche Sensorik vorgesehen werden, die erfasst, welcher Gang jeweils eingelegt ist und welches Drehmoment währenddessen übertragen wird (oder mit welcher Drehzahl die Gangstufe jeweils betrieben wird).

## Patentansprüche

1. Verfahren zum Steuern eines Kraftfahrzeug-Antriebsstranges (10), der einen Motor (12) und ein Getriebe (15) aufweist, mit dem Schritt, wenigstens einen Verschleiß-Parameter (V) des Getriebes (15) während dessen Laufleistung (L) zumindest einmal zu erfassen, wobei der Verschleiß-Parameter (V) den Verschleiß bzw. die Ermüdung wenigstens eines Bauteiles (16-22; 28, 30; 32, 34) des Getriebes (15) darstellt, wobei ein Belastungsgrenz-Parameter (B), der die maximale Belastung des Getriebes (15) durch den Motor (12) darstellt, in Abhängigkeit von dem erfassten Verschleiß-Parameter (V) eingestellt wird,
**dadurch gekennzeichnet, dass**
das Getriebe (15) ein Wechselgetriebe (15) mit mehreren Gangstufen ist und dass der Belastungsgrenz-Parameter (B) für zumindest einige der Gangstufen getrennt eingestellt wird.

2. Verfahren nach Anspruch 1, **dadurch gekennzeichnet, dass** der Verschleiß-Parameter (V) des Getriebes (15) während dessen Laufleistung (L) wiederholt, insbesondere kontinuierlich, erfasst und der Belastungsgrenz-Parameter (B) wiederholt in Abhängigkeit hiervon neu eingestellt wird.

3. Verfahren nach Anspruch 2, **dadurch gekennzeichnet, dass** der Verschleiß-Parameter (V) in einem Kraftfahrzeug-Steuergerät (40) gespeichert wird.

4. Verfahren nach einem der Ansprüche 1 bis 3, **dadurch gekennzeichnet, dass** der Belastungsgrenz-Parameter (B) von einem Kraftfahrzeug-Steuergerät (40) automatisch eingestellt wird.

5. Verfahren nach einem der Ansprüche 1 bis 4, **dadurch gekennzeichnet, dass** für zumindest einige der Gangstufen ein separater Verschleiß-Parameter (V) erfasst wird.

6. Verfahren nach einem der Ansprüche 1 bis 5, **dadurch gekennzeichnet, dass** das Getriebe (15) wenigstens ein Zahnrad aufweist und dass für das Zahnrad ein separater Verschleiß-Parameter (V) erfasst wird.

7. Verfahren nach Anspruch 5 oder 6, **dadurch gekennzeichnet, dass** der Verschleiß-Parameter (V) für eine Gangstufe bzw. für das Zahnrad ein Wert proportional zu der Anzahl der Überrollungen während der Laufleistung (L) des Getriebes ist.

8. Verfahren nach Anspruch 6 oder 7, **dadurch gekennzeichnet, dass** der Verschleiß-Parameter (V) für eine Gangstufe bzw. für das Zahnrad ein Wert proportional zu der Anzahl der Überrollungen während der Laufleistung (L) des Getriebes und proportional zu dem jeweils über den Radsatz bzw. das Zahnrad übertragenen Drehmoment ist.

9. Verfahren nach einem der Ansprüche 1 bis 8, **dadurch gekennzeichnet, dass** das Getriebe (15) wenigstens eine Welle (28, 30) aufweist und dass für die Welle (28, 30) ein separater Verschleiß-Parameter (V) erfasst wird.

10. Verfahren nach einem der Ansprüche 1 bis 9, **dadurch gekennzeichnet, dass** das Getriebe (15) wenigstens ein Drehlager (32, 34), insbesondere Wälzlager aufweist und dass für das Drehlager (32, 34) ein separater Verschleiß-Parameter (V) erfasst wird.

11. Verfahren nach Anspruch 9 oder 10, **dadurch gekennzeichnet, dass** der Verschleiß-Parameter (V) für die Welle (28, 30) und/oder das Drehlager (32, 34) proportional zu der Anzahl der Umdrehungen der Welle bzw. des Drehlagers ist.

12. Verfahren nach einem der Ansprüche 1 bis 11, **dadurch gekennzeichnet, dass** der Belastungsgrenz-Parameter (B) ein Wert proportional zu dem maximalen von dem Motor (12) an das Getriebe (15) übertragenen Drehmoment ist.

13. Verfahren nach einem der Ansprüche 1 bis 12, **dadurch gekennzeichnet, dass** der Belastungsgrenz-Parameter (B) ein Wert proportional zu der maximalen von dem Motor (12) an das Getriebe (15) übertragenen Drehzahl ist.

14. Verfahren nach einem der Ansprüche 1 bis 13, **dadurch gekennzeichnet, dass** der Belastungsgrenz-Parameter (B) ein Wert proportional zu der maximalen von dem Motor (12) an das Getriebe (15) übertragenen Drehbeschleunigung ist.

15. Antriebsstrang (10) für ein Kraftfahrzeug, mit einem Motor (12), einem Getriebe (15), Mitteln (40) zum Erfassen wenigstens eines Verschleiß-Parameters (V) des Getriebes (15) und mit Mitteln (40) zum Steuern des Antriebsstranges (10),
**dadurch gekennzeichnet, dass**
die Steuermittel (40) das Verfahren gemäß einem der Ansprüche 1 bis 14 durchführen.

## Claims

1. A process for controlling a motor vehicle drive train (10) which has an engine (12) and a transmission (15), with the step of at least once detecting at least one wear parameter (V) of the transmission (15) during its running performance (L), the wear parameter (V) representing the wear or the fatigue of at least one component (16-22; 28, 30; 32, 34) of the transmission (15), wherein
a load limit parameter (B), which represents the maximum load on the transmission (15) due to the engine (12), is set as a function of the detected wear parameter (V),
**characterized in that**
the transmission (15) is a change transmission (15) with a plurality of gear steps, and **in that** the load limit parameter (B) is set separately for at least some of the gear steps.

2. The method as claimed in claim 1, **characterized in that** the wear parameter (V) of the transmission (15) is detected repeatedly, in particular continuously, during its running performance (L), and the load limit parameter (B) is repeatedly set anew as a function of this.

3. The process as claimed in claim 2, **characterized in that** the wear parameter (V) is stored in a motor vehicle control apparatus (40).

4. The process as claimed in one of claims 1 to 3, **characterized in that** the load limit parameter (B) is set automatically by a motor vehicle control apparatus (40).

5. The process as claimed in one of claims 1 to 4, **characterized in that** a separate wear parameter (V) is detected for at least some of the gear steps.

6. The process as claimed in one of claims 1 to 5, **characterized in that** the transmission (15) has at least one gearwheel, and **in that** a separate wear parameter (V) is detected for the gearwheel.

7. The process as claimed in claim 5 or 6, **characterized in that** the wear parameter (V) for a gear step or for the gearwheel is a value proportional to the number of rollovers during the running performance (L) of the transmission.

8. The process as claimed in claim 6 or 7, **characterized in that** the wear parameter (V) for a gear step or for the gearwheel is a value proportional to the number of rollovers during the running performance (L) of the transmission and proportional to the torque transmitted in each case via the wheel set or the gearwheel.

9. The process as claimed in one of claims 1 to 8, **characterized in that** the transmission (15) has at least one shaft (28, 30), and **in that** a separate wear parameter (V) is detected for the shaft (28, 30).

10. The process as claimed in one of claims 1 to 9, **characterized in that** the transmission (15) has at least one rotary bearing (32, 34), in particular rolling bearing, and **in that** a separate wear parameter (V) is detected for the rotary bearing (32, 34).

11. The process as claimed in claim 9 or 10, **characterized in that** the wear parameter (V) for the shaft (28, 30) and/or for the rotary bearing (32, 34) is proportional to the number of revolutions of the shaft or of the rotary bearing.

12. The process as claimed in one of claims 1 to 11, **characterized in that** the load limit parameter (B) is a value proportional to the maximum torque transmitted from the engine (12) to the transmission (15).

13. The process as claimed in one of claims 1 to 12, **characterized in that** the load limit parameter (B) is a value proportional to the maximum rotational speed transmitted from the engine (12) to the transmission (15).

14. The process as claimed in one of claims 1 to 13, **characterized in that** the load limit parameter (B) is a value proportional to the maximum rotational acceleration transmitted from the engine (12) to the transmission (15).

15. A drive train (10) for a motor vehicle, with an engine (12), with a transmission (15), with means (40) for detecting at least one wear parameter (V) of the transmission (15) and with means (40) for controlling the drive train (10),
**characterized in that**
the control means (40) carry out the process as claimed in one of claims 1 to 14.

## Revendications

1. Procédé de commande d'une chaîne cinématique de véhicule qui comporte un moteur (12) et une transmission (15), consistant à saisir au moins une fois au moins un paramètre d'usure (V) de la transmission (15) pendant sa durée de fonctionnement (L), ledit paramètre d'usure (V) représentant l'usure ou la fatigue d'au moins un composant (16-22 ; 28, 30 ; 32, 34) de la transmission (15), un paramètre de limite de contrainte (B), qui représente la contrainte maximale de la transmission (15) exercée par le moteur (12), étant réglé en fonction du paramètre d'usure (V) saisi,
**caractérisé en ce que**
la transmission (15) est une boîte de vitesses (15) à plusieurs rapports et que le paramètre de limite de contrainte (B) est réglé séparément pour au moins certains des rapports.

2. Procédé selon la revendication 1, **caractérisé en ce que** le paramètre d'usure (V) de la transmission (15) est saisi de manière répétée, en particulier continue, pendant la durée de fonctionnement (L) de celle-ci et le paramètre de limite de contrainte (B) réglé à nouveau de manière répétée en fonction de cela.

3. Procédé selon la revendication 2, **caractérisé en ce que** le paramètre d'usure (V) est enregistré dans un appareil de commande de véhicule (40).

4. Procédé selon l'une des revendications 1 à 3, **caractérisé en ce que** le paramètre de limite de contrainte (B) est réglé automatiquement par un appareil de commande de véhicule (40).

5. Procédé selon l'une des revendications 1 à 4, **caractérisé en ce qu'**un paramètre d'usure (V) séparé est saisi pour au moins certains des rapports.

6. Procédé selon l'une des revendications 1 à 5, **caractérisé en ce que** la transmission (15) présente au moins un pignon et qu'un paramètre d'usure (V) séparé est saisi pour le pignon.

7. Procédé selon la revendication 5 ou 6, **caractérisé en ce que** le paramètre d'usure (V) pour un rapport ou pour le pignon est une valeur proportionnelle au nombre de roulements pendant la durée de fonctionnement (L) de la transmission.

8. Procédé selon la revendication 6 ou 7, **caractérisé en ce que** le paramètre d'usure (V) pour un rapport ou pour le pignon est une valeur proportionnelle au nombre de roulements pendant la durée de fonctionnement (L) de la transmission et proportionnelle au couple transmis par l'engrenage ou le pignon respectif.

9. Procédé selon l'une des revendications 1 à 8, **caractérisé en ce que** la transmission (15) présente au moins un arbre (28, 30) et qu'un paramètre d'usure (V) séparé est saisi pour l'arbre (28, 30).

10. Procédé selon l'une des revendications 1 à 9, **caractérisé en ce que** la transmission (15) présente au moins un palier rotatif (32, 34), en particulier un palier à roulement et qu'un paramètre d'usure (V) séparé est saisi pour le palier rotatif (32, 34).

11. Procédé selon la revendication 9 ou 10, **caractérisé en ce que** le paramètre d'usure (V) pour l'arbre (28, 30) et/ou le palier rotatif (32, 34) est proportionnel au nombre de tours de l'arbre et/ou du palier rotatif.

12. Procédé selon l'une des revendications 1 à 11, **caractérisé en ce que** le paramètre de limite de contrainte (B) est une valeur proportionnelle au couple maximal transmis par le moteur (12) à la transmission (15).

13. Procédé selon l'une des revendications 1 à 12, **caractérisé en ce que** le paramètre de limite de contrainte (B) est une valeur proportionnelle à la vitesse de rotation maximale transmise par le moteur (12) à la transmission (15).

14. Procédé selon l'une des revendications 1 à 13, **caractérisé en ce que** le paramètre de limite de contrainte (B) est une valeur proportionnelle à l'accélération de rotation maximale transmise par le moteur (12) à la transmission (15).

15. Chaîne cinématique (10) pour un véhicule, comprenant un moteur (12), une transmission (15), des moyens (40) pour saisir au moins un paramètre d'usure (V) de la transmission (15) et des moyens (40) pour commander la chaîne cinématique (10),
**caractérisée en ce que**
les moyens de commande (40) réalisent le procédé selon l'une des revendications 1 à 14.
